# EUROPÄISCHE PATENTANMELDUNG

(11) **EP 1 017 061 A1**
(43) Veröffentlichungstag der Anmeldung: **05.07.2000**
(21) Anmeldenummer: 99125024.2
(22) Anmeldetag: 15.12.1999
(51) Int. Cl.: G21C 17/06

(54) **Verfahren und Voorichtung zur Vermessung einer Inhomogenität an einer Oberfläche eines Kernreaktorbauteils und Anwendung des Verfahrens zur Vermessung einer elektrisch praktisch nicht leitenden Schicht**

(30) Priorität: 28.12.1998 DE 19860487
(71) Anmelder: SIEMENS AKTIENGESELLSCHAFT, 80333 München (DE)
(72) Erfinder: Kindlein, Wolfram, Dilp.-Ing.(FH), 91086 Aurachtal (DE)

(57) **Zusammenfassung**

Um eine Oxidschicht oder ähnliche Schichten (3) auf der Oberfläche (9) eines Kernreaktorbauteils (1) mit Wirbeistrom- oder Ultraschall-Sonden auszumessen, ist die Kennlinie (31) der entsprechenden Abstandsmeßsonde (21) erforderlich. Gemäß der Erfindung wird dazu die Sonde (21) von einer blanken Oberfläche (13) abgehoben und das Sondensignal (22) als Funktion des Abstands (17) von der Oberfläche (13) registriert.

## Beschreibung

Die Erfindung betrifft ein Verfahren zur Vermessung einer Inhomogenität an einer Oberfläche eines Kernreaktorbauteils, insbesondere einer Oberflächenschicht, mit einer Abstandsmeßsonde, bei dem in einem ersten Verfahrensschritt zur Kalibrierung der Abstandsmeßsonde eine Sondenkennlinie ermittelt wird, und bei dem in einem zweiten Verfahrensschritt die Vermessung der Inhomogenität erfolgt. Zur Vermessung wird die Abstandsmeßsonde entlang eines Wegs in einem konstanten Abstand über die Oberfläche geführt und die Ausdehnung der Inhomogenität aus dem Weg und dem mittels der Sondenkennlinie ausgewerteten Sondensignal bestimmt. Die Erfindung betrifft weiter eine Anwendung des genannten Verfahrens zur Vermessung einer elektrisch praktisch nicht leitenden Schicht auf einem leitfähigen Grundinaterial und eine Vorrichtung zur Vermessung einer Inhomogenität an einer Oberfläche eines Kernreaktorbauteils.

Beim Betrieb eines Kernreaktors erleiden die einzelnen Bauteile des Kernreaktors unterschiedliche Verschleißerscheinungen. Insbesondere die Bauteile innerhalb des Containments sind aufgrund ihres Betriebs in feuchter Umgebung hohem Verschleiß durch Korrosion und Materialabtrag ausgesetzt. Hierzu gehört auch die Entstehung von Inhomogenitäten anderer Art, beispielsweise von Rissen an Kernreaktorbauteilen. Vor allem betrifft dies den Betrieb von Brennelementen, der unter Wasser, bei hohen Temperaturen und stark variierenden Temperatur- und Druckverhältnissen erfolgt. Zudem sind diese vorwiegend aus Zirkon bestehenden Kernreaktorbauteile anfälliger gegenüber Verschleißerscheinungen als hochwertige Stähle. Der Betrieb von Brennelementen führt deshalb infolge von Korrosion zu einem Wachstum einer Oxidschicht auf den Brennelementkomponenten. Ebenso können beim Reaktorbetrieb an den Brennelementkomponenten Materialabträge entstehen. Die Oxidschichtdicken bzw. die Schichtdicke von Materialabträgen können einige 10 µm bis einige 100 µm betragen.

Die betriebsbegleitende Verfolgung und Überwachung der Oxidschichtdicken an Kernreaktorbauteilen und Brennelementen ist dementsprechend wichtig. Dies ist insbesondere bei Brennelementkomponenten und Brennstäben für den Brennelementeinsatz sowie für die Entwicklung korrosionsbeständiger Brennelement- und Hüllrohrmaterialien von Bedeutung. Die Dicken von Oxidschichten und Materialabträgen sind auslegungsrelevante Größen. Die Messung und Überwachung dieser Verschleißerscheinungen ist deshalb aus Gründen der Reaktorplanung und Reaktorsicherheit wichtig.

Der Einsatz des eingangs genannten Verfahrens ist vor allem für Umgebungsbedingungen vorgesehen, wie sie in Kernkraftwerken vorliegen. Dabei ist zu berücksichtigen, daß insbesondere zur Vermessung räumlicher Inhomogenitäten an einer Oberfläche eines Brennelements oder Brennstabs der erste Verfahrensschritt - nämlich die Kalibrierung der Abstandsmeßsonde - und der zweite Verfahrensschritt - nämlich die Vermessung der Inhomogenität - unter Wasser in einem Becken eines Kernreaktors ferngesteuert vorgenommen werden. Entsprechend findet die Vermessung von Inhomogenitäten an Kernreaktorbauteilen in der Regel im Reaktorlagerbecken unter Wasser und unter erheblichem Strahleneinfluß statt. Andere Einsatzgebiete als in Kernkraftwerken für das eingangs genannte Verfahren sind jedoch nicht ausgeschlossen.

Zur Vermessung der genannten Inhomogenitäten an einer Oberfläche eines Kernreaktorbauteils ist die Messung kleiner Abstände mit einer Genauigkeit im Mikrometerbereich bei einem Absolutabstand im Millimeterbereich notwendig. Dies wird erreicht mittels spezieller Abstandsmeßsonden. Dazu dient in der Regel eine Wegaufnehmersonde. Dies kann beispielsweise eine elektrische Wirbelstromsonde, eine Ultraschallsonde oder ein Induktivwegaufnehmer oder ein kapazitiv arbeitender Wegaufnehmer sein. So kann eine räumliche Ausdehnung einer Inhomogenität vermessen werden. Dies betrifft also ihre flächige Ausdehnung entlang der Oberfläche und vor allem ihre Ausdehnung praktisch senkrecht zur Oberfläche, z.B. die Bestimmung einer Schichtdicke.

Das physikalische Meßprinzip beim räumlichen Vermessen einer Inhomogenität an einer Oberfläche, insbesondere bei der Bestimmung ihrer Ausdehnung praktisch senkrecht zur Oberfläche basiert auf dem sogenannten Abhebeeffekt. Im wesentlichen entsteht beispielsweise durch eine Oxidschicht oder durch Abtrag einer Materialschicht ein Abstand zwischen dem in der Regel metallischen Grundmaterial und der Abstandsmeßsonde. So wird beispielsweise bei der Korrosion des Grundmaterials ein Teil des Grundmaterials an der Oberfläche in ein Oxid umgewandelt. Dadurch liegt nun eine Oxidschicht anstatt des Grundmaterials an der Oberfläche des Kernreaktorbauteils. Seine Oberfläche ist nicht mehr blank. Das restliche nicht oxidierte Grundmaterial liegt unter der Oxischicht. Beispielsweise kann die Oxidschicht auch ein wesentlich größeres Volumen einnehmen als das ursprüngliche Grundmaterial, aus dem das Oxid entstanden ist. Platzt die entstandene Oxidschicht beispielsweise vom Kernreaktorbauteil ab, so entsteht ein Materialabtrag, der in Form einer Schicht oder eines Lochs in das usprüngliche Volumen des Grundmaterials vor der Korrosion hineinragt. Die Oberfläche des Kernreaktorbauteils ist nicht mehr glatt. Ebenso ist die Oberfläche des Kernreaktorbauteils nicht mehr glatt, wenn ein Riß in das ursprüngliche Volumen des Grundmaterials hineinragt. In den beschriebenen Situationen ist die Abstandsmeßsonde also von der Oberfläche des Grundmaterials abgehoben, und der Abstand zur Oberfläche des Grundmaterials ist durch die räumliche Ausdehnung der Inhomogenität zum Grundmaterial gegeben, während sie bei einer glatten, blanken Oberfläche des Kernreaktorbauteils auf dem Grundmaterial aufliegt. Entsprechend liefert die Abstandsmeßsonde ein mit dem Abhebeweg, welcher beispielsweise der Oxidschichtdicke oder der Dicke des Materialabtrags entspricht, veränderliches Sondensignal. Dieses Sondensignal entsteht beispielsweise bei einer Ultraschallsonde durch einen Signallaufzeiteffekt oder beispielsweise bei einer Wirbelstrommeßsonde oder einem Induktivwegaufnehmer durch eine Impedanz- oder Induktionsänderung.

Ein derartiges Sondensignal ist in der Regel nicht über größere Abhebewege proportional zum Abhebeweg. Die Abstandsmeßsonde muß deshalb in einem ersten Verfahrensschritt kalibriert werden. Dazu wird eine Sondenkennlinie ermittelt, welche den Verlauf eines Sondensignals als Funktion eines definierten Abstands der Sonde zu einer Oberfläche eines Kalibrierstandards beschreibt. In einem zweiten Verfahrensschritt erfolgt dann die Vermessung der Inhomogenität, indem die Abstandsmeßsonde entlang eines Wegs über die Oberfläche geführt wird, wobei sie in einem konstanten Abstand, senkrecht zur Oberfläche des Kernreaktorbauteils gehalten wird. Das zu vermessende Objekt wird aber über den interessierenden Bereich mit der Abstandsmeßsonde abgefahren. Die räumliche Ausdehnung der Inhomogenität wird dabei aus dem Weg entlang der Oberfläche und dem mittels der Sondenkennlinie ausgewerteten Sondensignal bestimmt. Als Resultat der Meßfahrt erhält man die vom abgefahrenen Weg abhängige Darstellung der Dicke der Oxidschicht oder des Materialabtrags. Vorzugsweise erfolgt vor und nach jeder Meßfahrt eine automatische Kalibrierung der Abstandsmeßsonde, damit äußere systematische Einflüsse keine Auswirkung auf das Meßergebnis haben und die Integrität der Messung sichergestellt sei. Letztere ist wesentlich bestimmt durch die Zuverlässigkeit und Genauigkeit des verwendeten Kalibrierverfahrens.

In einem bekannten Verfahren wird zur Vermessung der Dicke von Oxidschichten und Materialabträgen beispielsweise an Brennstäben eine Wirbelstromsonde an einem speziell angefertigten Referenzstandard kalibriert. Dieser Referenzstandard ist durch eine Kalibriereinrichtung in eine Meßvorrichtung integriert. Er entspricht in seinen Materialeigenschaften und in seiner Form im wesentlichen dem zu vermessenden Kernreaktorbauteil. Zur Vermessung eines Brennstabs sind dies insbesondere speziell angefertigte Hüllrohrstücke aus gleichem Hüllrohrmaterial wie der zu vermessende Brennstab. Ein solcher Kalibrierstandard für ein Hüllrohr wird mit Folien definierter Dicke beklebt und bekommt damit bereichsweise glatte und blanke Oberflächen, die durch Stufen mit definierter Höhe gegeneinander abgegrenzt sind. Auf diese Weise wird ein Referenzstandard mit in der Regel nicht mehr als drei glatten und blanken Bereichen präpariert, die durch Stufen definierter Höhe voneinander getrennt sind. Dementsprechend ergeben sich in der Regel nicht mehr als drei Kalibrierpunkte zur Festlegung der Sondenkennlinie Die Festlegung der Sondenkennlinie erfolgt durch eine lineare Interpolation zwischen den wenigen Kalibrierpunkten.

Die genannte Verfahrensweise erfordert das Anfertigen neuer, angepaßter Referenzstandards - beispielsweise für geänderte Materialleitfähigkeiten bei der Oxidschichtdickenmessung - und ist entsprechend aufwendig und kostenintensiv. Ebenso ist das Mitführen der Referenzstandards mit der im Meßsystem integrierten Kalibriereinrichtung für jeden Meßbereich und jede Meßaufgabe notwendig. Der Tausch der Referenzstandards in den Kalibriereinrichtungen entsprechend der jeweiligen Meßaufgabe ist zeitraubend und umständlich.

Darüber hinaus birgt das bisher verwendete Verfahren zur Kalibrierung einer Abstandsmeßsonde relativ große Ungenauigkeiten in sich. Im Einzelfall nicht auszuschließende Unterschiede in den Grundmaterialien der Kalibrierstandards und dem zu vermessenden Kernreaktorbauteil führen zu nur schwer identifizierbaren systematischen Fehlern im Meßergebnis. Dies betrifft beispielsweise die Leitfähigkeit des Grundmaterials bei Schichtdickenmessungen mit Hilfe von Wirbelstromsonden.

Die Verwendung von speziell hergestellten Referenzstandards zur Kalibrierung von Abstandsmeßsonden birgt sowohl aufgrund des Herstellungsprozesses der Referenzstandards als auch aufgrund des Kalibriervorgangs am Referenzstandard selbst weitere nicht unerhebliche Ungenauigkeiten. Die Realisierung einer definierten Stufenhöhe an genannten Referenzstandards kann nur mit einer Genauigkeit von etwa 3 bis 5 µm erfolgen. Ebenso birgt der Kalibriervorgang am Standard selbst eine Ungenauigkeit von bis zu 3 µm. Darüber hinaus führen Temperatur- und relative Positionierunterschiede der Abstandsmeßsonde am Meßstandard im Unterschied zum zu vermessenden Kernreaktorbauteil zu weiteren Ungenauigkeiten. Schließlich liefert die lineare Interpolation der Sondenkennlinie unter Berücksichtigung von nur wenigen, in der Regel nicht mehr als drei Kalibrierpunkten als Stützpunkte keine besonders verlässliche Kalibrierung der Meßsonde.

In der Summe kann aus den genannten Gründen der absolute Fehler einer Schichtdickenmessung an Kernreaktorbauteilen unter Benutzung des bisher verwendeten Kalibrierverfahrens bis zu 30 µm betragen und damit einen relativen Fehler bis zu 20 % bewirken.

Die Aufgabe der vorliegenden Erfindung ist deshalb ein verbessertes Verfahren bzw. eine entsprechende Vorrichtung zur Vermessung einer Inhomogenität an einer Oberfläche eines Kernreaktorbauteils, insbesondere einer Oberflächenschicht, mit einer Abstandsmeßsonde anzugeben.

Entsprechend dem Stand der Technik wird dazu in einem ersten Verfahrensschritt zur Kalibrierung der Abstandsmeßsonde eine Sondenkennlinie ermittelt und in einem zweiten Verfahrensschritt erfolgt die Vermessung der Inhomogenität, indem die Abstandsmeßsonde entlang eines Weges in einem praktisch kontanten Abstand, über die Oberfläche geführt wird, und die Ausdehnung der Inhomogenität aus dem Weg und dem mittels der Sondenkennlinie ausgewerteten Sondensignal bestimmt wird. Die Sonde wird also zur Vermessung entlang eines Weges in einer Fläche geführt, wobei die Fläche praktisch parallel zur Oberfläche verläuft und von der Oberfläche des Kernreaktorbauteils einen praktisch konstanten, senkrechten Abstand hat. Der Weg in der parallelen Fläche verläuft praktisch so wie die Projektion des Weges auf der Oberfläche. Der Weg und die Projektion des Weges sind voneinander durch den konstanten, praktisch senkrechten Abstand beabstandet. Die Fläche bildet dabei aber nicht die lokalen Unebenheiten einer beschädigten Oberfläche nach (z.B. Löcher, Risse, Oxidschichten), da die Beschädigungen vermessen werden. Die Fläche verläuft also praktisch parallel zu einer Oberfläche, die einen glatten und blanken Zustand aufweist und damit dem Verlauf der Oberfläche in ihrem ursprünglichen, unbeschädigten Zustand entspricht. Die Sonde wird entlang des Weges in dieser Fläche durch eine Führung gehalten.

Erfindungsgemäß wird in dem ersten Verfahrensschritt die Sondenkennlinie dadurch ermittelt, daß die Abstandsmeßsonde zwischen einer glatten und blanken Oberfläche und einem maximalen Abstand von der glatten und blanken Oberfläche bewegt wird. Beim Bewegen der Sonde werden praktisch ständig der aktuelle Abstand von der glatten und blanken Oberfläche und das Sondensignal registriert, d.h. das Sondensignal wird als Funktion des Abstands von der glatten und blanken Oberfläche gemessen und festgehalten.

Prinzipiell ist das Verfahren mit verschiedensten Abstandsmeßsonden durchführbar. Als Abstandsmeßsonde dient dabei vorteilhaft eine der oben genannten Wegaufnehmersonden, insbesondere ein Induktivwegaufnehmer oder eine Ultraschallsonde.

Eine glatte und blanke Stelle der Oberfläche des Kernreaktorbauteils dient vorteilhaft praktisch als Kalibrierstandard. Es kann aber auch vorteilhaft sein, die Sonde an einer glatten und blanken Stelle der Oberfläche eines ersten Kernreaktorbauteils in dem ersten Verfahrensschritt zu kalibrieren und die Vermessung eines zweiten Kernreaktorbauteils in dem zweiten Verfahrensschritt durchzuführen.

Die Oberfläche wird vorteilhaft auch von einer Unterlage gebildet. Die Vermessung einer Inhomogenität betrifft vorteilhaft die räumliche Ausdehnung der Inhomogenität. So ist zunächst die Dicke einer Inhomogenität vermeßbar nach dem oben genannten Verfahren, beispielsweise eine Schichtdicke. Indem die Sonde nacheinander entlang mehrerer, unterschiedlicher der oben genannten Wege, die in einer zur Oberfläche parallelen Fläche nebeneinander liegen, geführt wird, ist in dem zweiten Verfahrensschritt die räumliche Ausdehnung einer Inhomogenität - also ihr Profil in Tiefe und Breite - vermeßbar.

Zur Ermittlung der Sondenkennlinie wird die Abstandsmeßsonde vorteilhaft auf der glatten und blanken Oberfläche aufgesetzt und bis zu einem maximalen Abstand von der glatten und blanken Oberfläche abgehoben. Ausgehend von dem kleinsten Abstand wird also das Sondensignal zur Ermittlung der Kennlinie bis zum maximalen Abstand registriert.

Vorteilhaft wird aber auch die Abstandmeßsonde beginnend beim maximalen Abstand bis zum kleinsten Abstand an die Oberfläche herangeführt und gegebenenfalls schließlich auf die glatte und blanke Oberfläche aufgesetzt werden. In diesem Fall wird also ausgehend von dem maximalen Abstand das Sondensignal zur Ermittlung der Kennlinie bis zum kleinsten Abstand, der auch ein Aufsetzen der Sonde auf die Oberfläche bedeuten kann, registriert.

Es kann auch günstig sein, daß die Kennlinie nur in einem Teilbereich zwischen der Oberfläche und einem maximalen Abstand registriert wird. Die Abstandsmeßsonde kann auch vorteilhaft zur Registrierung der Kennlinie in zwei Richtungen - also zwischen dem maximalen Abstand und der Oberfläche hin und her - bewegt werden.

Die Erfindung profitiert von der Erkenntnis, daß bei diesem Verfahren sämtliche Unsicherheiten beim Aufbringen definierter Schichtdicken auf einem Kalibrierstandard wie bei bisherigen Verfahren mit einem Referenzstandard entfallen. Dagegen kann die Ermittlung des aktuellen Abstands einer Abstandsmeßsonde von der glatten und blanken Oberfläche eines Kalibrierstandards wesentlich genauer erfolgen als die Herstellung eines Referenzstandards mit einer bestimmten Schichtdicke.

Schließlich erlaubt es das erfindungsgemäße Verfahren, eine praktisch beliebig große Anzahl von Kalibrierpunkten als Stützpunkte für die Sondenkennlinie zu verwenden. Somit entfallen auch alle Ungenauigkeiten, die bei bisherigen Verfahren durch die unzureichende Interpolation der Sondenkennlinie unter Berücksichtigung von wenigen (in der Regel nur drei) Stützpunkten entstanden sind. Durch das Verfahren ist jedoch jede Art und auch ein nichtlinearer Verlauf der Sondenkennlinie - beispielsweise ein wurzelförmiger oder logarithmischer Verlauf - erfaßbar. Auch ist der Offset eines Bewegungsvorgangs exakt bestimmbar. Der Offset kann dadurch entstehen, daß nach Beginn des Bewegungsvorgangs die Sonde einer beabsichtigten Bewegung zunächst nicht folgt, da beispielsweise ein mechanisches Spiel bei einer Bewegungsvorrichtung vorhanden ist. Weder ein Offset noch eine Nichtlinarität ist durch bisher übliche Verfahren mit nur wenigen Stützpunkten erfaßbar gewesen, da diese im wesentlichen auf lineare Sondenkennlinien beschränkt sind.

Es kann eine beliebig große Anzahl von Kalibrierpunkten vermessen werden, die so dicht beieinander liegen, daß zur Ermittlung der Sondenkennlinie praktisch die Notwendigkeit einer Interpolation dieser Kalibrierpunkte entfällt. Das Sondensignal kann als Funktion des Abstands von der blanken Oberfläche praktisch direkt in Form einer Sondenkennlinie registriert werden. Das vorliegende Verfahren ist also zuverlässiger und genauer als bisherige Verfahren. Eine Anfertigung von Kalibrierstandards entfällt weitgehend, so daß das Verfahren auch Kostenvorteile bringt und einfacher durchzuführen ist, als bisherige Verfahren.

Vorteilhaft erfolgt die Messung des genannten aktuellen Abstands von der blanken Stelle und des genannten Sondensignals dadurch, daß der Abstand zu der blanken Oberfläche, welcher nach einer Weiterbildung der Erfindung selbst als Kalibrierstandard verwendet wird, schrittweise geändert wird, und daß bei jedem Schritt der aktuelle Abstand und das jeweils zugehörige Sondensignal registriert werden. Da die Schritte sehr dicht beinanderliegen wird praktisch ständig ein aktueller Abstand und ein zugehöriges Sondensignal registriert.

Vorzugsweise wird dazu die Abstandsmeßsonde mittels einer Abhebeeinrichtung mit einem Impulsgeber von der Oberfläche abgehoben. Der Impulsgeber dient dabei zur Definition eines Wegsignals und liefert aus diesem Grund wegproportionale Impulse, vorzugsweise nicht weniger als 10000 Impulse pro mm des Abhebeabstands. Das Verfahren ist vorteilhaft so ausgelegt, daß ein Kalibrierbereich für die Abstandsmeßsonde zwischen 0 µm und 1000 µm mit einer Teilung von wenigstens 1/10 µm abgedeckt wird. Insbesondere kann zur Ermittlung der Sondenkennlinie die Abstandsmeßsonde bis zu einem maximalen Abstand von 10 mm abgehoben werden - gegenüber dem Stand der Technik ein wesentlich größerer Bereich, in dem auch eine eventuell nichtlinear verlaufende Sondenkennlinie aufgrund der dichten Folge von Kalibrierpunkten beim erfindungsgemäßen Verfahren korrekt wiedergegeben wird. Ungenauigkeiten durch eine Interpolation wie bei bisherigen Verfahren entstehen nicht.

Die Sondenkennlinie wird vorteilhaft auf Fehler, insbesondere auf systematische Ungenauigkeiten oder systematische Fehler oder einen statistischen Untergrund, korrigiert. Die Fehler können beispielsweise durch das Bewegen der Sonde entstehen. Dies können beispielsweise auch periodische Ungenauigkeiten sein, die aufgrund drehender mechanischer Teile in einer Bewegungsvorrichtung zum Bewegen der Sonde entstehen. Die Korrektur erfolgt günstigerweise mit einer Fehlerkennlinie.

Vorteilhaft wird mit einer Referenzmessung und/oder einer digitalen Bearbeitung der Sondenkennlinie eine Referenzkennlinie bestimmt. Anschließend wird der Unterschied der Referenzkennlinie zu dem von der Bewegungsvorrichtung gebildeten aktuellen Abstand ermittelt. Aus dem Unterschied, beispielsweise der Differenz, von beiden ergibt sich die Fehlerkennlinie.

Insbesondere befinden sich Kernreaktorbauteil und der Kalibrierstandard bei der Vermessung der räumlichen Ausdehnung einer Inhomogenität an einer Oberfläche des Kernreaktorbauteils unter Wasser in einem Lagerbecken eines Kernreaktors. Aus diesem Grund sind die für einen Einsatz unter Wasser vorgesehenen Einrichtungen zur Durchführung des Verfahrens vor Wasser geschützt. Es können auch noch strahlende Brennelemente mit dem Verfahren vermessen werden, weshalb vorzugsweise die für einen Einsatz in der Nähe solcher Strahlungsquellen vorgesehenen Vorrichtungen zur Durchführung des Verfahrens auch vor Strahlung geschützt sind. Dementsprechend wird das Verfahren insbesondere mit einer fernbedienbaren und/oder automatisch steuerbaren Vorrichtung durchgeführt.

Weiterhin dient nach einer Weiterbildung der Erfindung ein glatter Bereich mit blanker Oberfläche am zu vermessenden Kernreaktorbauteil als Kalibrierstandard bei dem erfindungsgemäßen Verfahren. Der genannte Bereich muß sowohl glatt, also ohne Oberflächenrauhigkeit, als auch blank sein, also ohne Oberflächenoxid- oder Materialabtragschicht, das Grundmaterial ist also freigelegt. Nach einer Weiterbildung der Erfindung kann dafür ein Bereich des zu vermessenden Kernreaktorbauteils genutzt werden, der erfahrungsgemäß frei von Inhomogenitäten ist. Beispielsweise bei Oxidschichtdickenmessung bei einem Brennstab kann dazu der untere Teil des Brennstabs dienen, der erfahrungsgemäß eine im Rahmen der Meßgenauigkeit vernachlässigbar dünne Oxidschicht und praktisch keinen Materialabtrag aufweist. Vorteilhaft bei dieser Wahl des Kalibrierstandards am zu vermessenden Kernreaktorbauteil selbst ist, daß keine Meßungenauigkeiten durch Materialunterschiede oder Umgebungsunterschiede entstehen. Beispielsweise werden Temperatur- oder Positionierunterschiede der Abstandsmeßsonde vermieden, die zwischen dem am vom Meßobjekt entfernten Kalibrierstandard und dem Meßobjekt selbst entstehen könnten. Auch können Mehrfachreflexionen von Ultraschallpulsen oder die Eindringtiefe von Wirbeiströmen besonders bei dünnen Wänden das Sondensignal beeinflussen; wird die erforderliche Sondenkennlinie am Meßobjekt selbst kalibriert, so sind solche Einflüße ausgeschaltet.

Die genannte blanke Oberfläche in dem glatten Bereich kann entweder schon am Kernreaktorbauteil vorhanden sein, oder sie kann durch eine Bearbeitung des Kernreaktorbauteils freigelegt werden. Ein ausgewählter Bereich und/oder eine blanke Oberfläche wird dazu vorteilhaft poliert oder freigekratzt.

Gegebenenfalls kann alternativ auch ein mit einer Oxidschicht überzogener Bereich als Kalibrierstandard dienen, sofern die Dicke der Oxidschicht bekannt ist.

Besteht dennoch Bedarf für einen vorn Meßobjekt entfernten Kalibrierstandard, so dient günstigerweise ein glattes Bauteil mit blanker Oberfläche und praktisch gleichen Materialeigenschaften wie das Kernreaktorbauteil als Kalibrierstandard.

Bei dem Verfahren nach der Erfindung oder einer Weiterbildung der Erfindung entfällt die aufwendige Anfertigung von Referenzstandards, weil die Kennlinie an einfach herzustellenden oder bereits vorhandenen Bauteilen kalibriert wird.

Bei dem genannten Verfahren dient vorteilhaft eine Wegaufnehmersonde als Abstandsmeßsonde, die vorzugsweise eine elektrische Wirbelstromsonde oder eine Ultraschallsonde oder ein Induktivwegaufnehmer ist. Das Verfahren erweist sich weiter als besonders günstig, wenn als Inhomogenität eine Schicht, insbesondere eine Oxidschicht, auf einem Grundmaterial an einer Oberfläche eines Kernreaktorbauteils mit einer Abstandsmeßsonde vermessen wird. Beispielsweise kann auch ein Materialabtrag oder ein Riß in der Oberfläche eines Grundmaterials ausgemessen werden. Gegebenenfalls sind auch andere Abstandsmeßsonden für ähnliche Inhomogenitäten, wie beispielsweise optische Wegmesser, für ein oben genanntes Verfahren geeignet.

Vorteilhaft wird das Verfahren zur Vermessung einer elektrisch praktisch nicht leitenden Schicht, beispielsweise einer Oxidschicht oder auch einer Schicht abgetragenen Materials, auf einem leitfähigen Grundmaterial angewendet.

Als besonders vorteilhaft erweist sich die Anwendung des Verfahrens zur Vermessung von Oxidschichten auf metallischen Flächen, vorzugsweise bei solchen metallischen Flächen, die überwiegend aus Zirkonium bestehen. Insbesondere betrifft dies die Anwendung des Verfahrens bei Komponenten von Kernreaktorbrennelementen, vorzugsweise zur Vermessung von Inhomogenitäten an Brennstäben. Außerdem kann mit dem Verfahren auch ein Kernreaktorbauteil ausgemessen werden, bei dem durch lokale Einflüsse (z.B.Reibung ) Material abgetragen ist und daher in einem Oberflächenbereich die äußerste Materialschicht fehlt (abgetragene Materialschicht). Dabei werden auch Löcher und Risse erkannt.

Nicht immer wird zur Kalibrierung der Abstandsmeßsonde ausreichend Platz vorhanden sein, um die Sondenkennlinie nach dem erfindungsgemäßen Verfahren zu ermitteln, beispielsweise bei innenliegenden, zum Teil räumlich eng aneinander angeordneten Kernreaktorbauteilen (beispielsweise innenliegende Brennstäben in einem Kernreaktorbrennelement) In solchen Fällen kann die Kalibrierung der Abstandsmeßsonde wie im Stand der Technik an einem Referenzstandard mit bereichsweise glatten und blanken Oberflächen, die durch Stufen mit definierter Höhe gegeneinander abgegrenzt sind, erfolgen. Die genannten Ungenauigkeiten bei der Herstellung und Vermessung der Stufen mit definierter Höhe bei einem solchen Referenzstandard können jedoch durch die Anwendung des erfindungsgemäßen Verfahrens zur Vermessung eines solchen Referenzstandards vermieden werden. Da das Verfahren nach der Erfindung oder einer Weiterbildung der Erfindung eine Wegmeßgenauigkeit von nicht weniger als 1/10 µm liefert, übertrifft diese Meßgenauigkeit die Genauigkeit bisher üblicher Verfahren und es eignet sich damit zur exakten Vermessung eines Referenzstandards.

Eine Vorrichtung zur Vermessung einer Inhomogenität an einer Oberfläche eines Kernreaktorbauteils, insbesondere einer Oberflächenschicht, enthält eine Abstandsmeßsonde. Diese ist mittels eines auf einer Oberfläche aufsetzbaren Distanzhalters und einer Vorschubeinrichtung entlang eines Weges, in konstantem Abstand von der Oberfläche über die Oberfläche verschiebbar. Unter Distanzhalter ist dabei auch ein Führungsschuh oder ein ähnliches Bauteil zu verstehen, das die Sonde direkt auf die Oberfläche des Kernreaktorbauteils aufzusetzen gestattet und dabei lediglich lokale Unebenheiten (z.B. Löcher) der Oberfläche ausgleicht. Die Vorrichtung enthält weiter eine Recheneinrichtung. Die Recheneinrichtung bildet aus dem Signal der Abstandsmeßsonde und einer einem Speicher entnehmbaren Kennlinie die zur Oberfläche senkrechte Ausdehnung der Inhomogenität am Ort der Abstandsmeßsonde. Erfindungsgemäß umfaßt die genannte Vorrichtung zudem eine Bewegungseinrichtung zum Bewegen der Abstandsmeßsonde zwischen der glatten und blanken Oberfläche und dem maximalen Abstand. Außerdem umfaßt die Vorrichtung eine Registriereinrichtung, über die beim Bewegen der Abstandsmeßsonde zwischen der glatten und blanken Oberfläche und dem maximalen Abstand der aktuelle Abstand der Abstandsmeßsonde von der Oberfläche und das dem Abstand zugeordnete Signal der Abstandsmeßsonde als Sondenkennlinie im Speicher hinterlegbar ist. Bei der anschließenden Vermessung einer Inhomogenität ist diese Kennlinie dann dem Speicher entnehmbar und anhand dieser Kennlinie ist einem Sondensignal bei der Vermessung die senkrechte Ausdehnung der Inhomogenität am Ort der Abstandsmeßsonde auf dem Weg über die Oberfläche zuweisbar. Vorteilhaft enthält die Registriereinrichtung die Recheneinrichtung und den Speicher.

Anhand einer Zeichnung werden vorteilhafte Ausführungsformen der Erfindung näher erläutert. Die Figuren zeigen in schematischer Darstellung:
- FIG 1: ein Schema des Verfahrens zur Vermessung einer Inhomogenität mit einer Abstandsmeßsonde und der Ermittlung der Sondenkennlinie,
- FIG 2: eine Sondenkennlinie wie sie nach dem erfindungsgemäßen Verfahren ermittelbar ist,
- FIG 3: mögliche Formen einer Inhomogenität und an einem Brennstab, die nach dem erfindungsgemäßen Verfahren zur Vermessung der räumlichen Ausdehnung einer Inhomogenität an einer Oberfläche vermessbar sind,
- FIG 4: weitere mögliche Formen einer Inhomogenität an einem Brennstab, wie in FIG 3,
- FIG 5: weitere mögliche Formen einer Inhomogenität an einem Brennstab, wie in FIG 3 und FIG 4,
- FIG 6: ein Ergebnis einer Vermessung eines Brennstabs entlang seiner Achse,
- FIG 7: einen Referenzstandard,
- FIG 8: ein Ergebnis einer Vermessung eines Referenzstandards nach FIG 7,
- FIG 9: eine Ausführung einer Vorrichtung zur Vermessung der räumlichen Ausdehnung einer Inhomogenität an der Oberfläche eines Brennstabs,
- FIG 10: eine weitere Ausführung einer Vorrichtung zur Vermessung der räumlichen Ausdehnung einer Inhomogenität an einer Oberfläche.

Gleiche Elemente tragen in den Figuren jeweils gleiche Bezugszeichen.

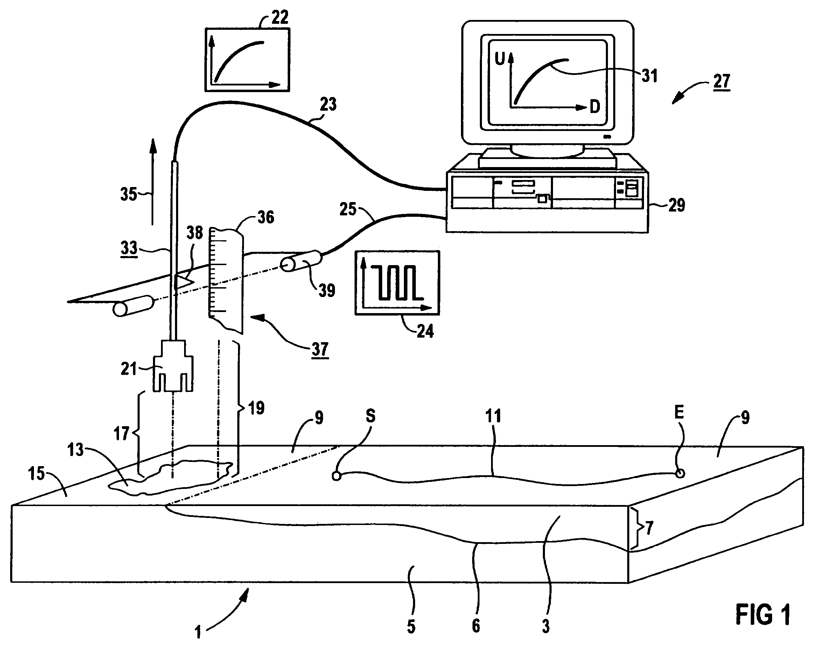

In Figur 1 ist der Ablauf des Verfahrens mit einer symbolischen Darstellung der wesentlichen Verfahrenselemente skizziert. Entsprechend dem Stand der Technik wird in einem ersten Verfahrensschritt zur Vermessung einer räumlichen Ausdehnung einer Inhomogenität 3 an einer Oberfläche 9 eines Kernreaktorbauteils 1 mit einer Abstandsmeßsonde 21 zunächst die Abstandsmeßsonde 21 kalibriert und dann die Inhomogenität 3 vermessen.

Jedoch wird abweichend vom Stand der Technik zur Kalibrierung die Abstandsmeßsonde 21 zwischen einer glatten und blanken Stelle 13 an der Oberfläche 9 und einem maximalen Abstand 19 bewegt. Dabei wird praktisch ständig ein aktueller Abstand 17 von der glatten und blanken Oberfläche 15 und das Sondensignal 22 registriert. Wie in Figur 1 gezeigt, kann ein glatter Bereich mit blanker Oberfläche 15 an der Oberfläche 9 des Kernreaktorbauteils selbst als Kalibrierstandard 13 dienen. Günstigerweise dient also ein Teil des Kernreaktorbauteils 1 als Kalibrierstandard 13, in dem das Grundmaterial 5 des Kernreaktorbauteils 1 an der Oberfläche des Kernreaktorbauteils 9 freigelegt ist. Dies ist vorteilhaft ein glatter Bereich mit blanker Oberfläche 15.

Die Sonde 21 kann zur Kalibrierung auf beliebige Weise zwischen dem maximalen Abstand 19 und der glatten und blanken Stelle 13 bewegt werden. Vorteilhaft ist beispielsweise, die Sonde 21 von einem beliebigen Abstand aus an die Stelle 13 heranzuführen und gegebenenfalls abschließend auf die Stelle 13 aufzusetzen.

Als besonders günstig erweist sich jedoch eine Durchführung des genannten Verfahrens gemäß der schematischen Darstellung in Figur 1.

Die Abstandsmeßsonde 21 wird dazu auf die Oberfläche des Kalibrierstandards 13 aufgesetzt, und durch eine Abhebeeinrichtung 33 wird sie in eine Richtung 35 von der Oberfläche 9 des Kernreaktorbauteils 1 hinweg abgehoben. Dabei wird praktisch ständig der aktuelle Abstand 17 der Abstandsmeßsonde 21 von der glatten und blanken Oberfläche des Kalibrierstandards 13 durch ein Mittel 37 zur Abstandsmessung festgestellt. Dieses Mittel 37 ist in der Figur 1 symbolisch durch ein Maßstab 36 und einen Zeiger 38 skizziert. Zur Erzeugung eines Abstandssignals kann ein Impulsgeber 39 dienen, der wegproportionale Impulse liefert.

In Figur 1 ist der Impulsgeber 39 symbolisch durch eine Lichtschrankenanordnung realisiert, die mittels der Maßstabteilung 36 ausgelöst wird. Beim Abheben der Sonde 21 vom Kalibrierstandard 13 wird so ein dem aktuellen Abstand 17 proportionales Abstandssignal erzeugt, das über eine Leitung 25 zur Übermittlung des Abstandssignals an eine Registriereinrichtung 27 weitergeleitet wird. Ebenso liefert die Abstandsmeßsonde 21 ein Sondensignal, das sich ebenfalls mit dem aktuellen Abstand 17 der Sonde 21 ändert. Dieses Sondensignal wird ebenfalls über eine Leitung 23 zur Übermittlung des Sondensignals an die Registriereinrichtung 27 geleitet.

Auf diese Weise werden praktisch ständig während des Abhebevorgangs ein Sondensignal 22 und ein dazugehöriges Abstandssignal 24 an die Registriereinrichtung 27 weitergegeben. Daher wird der Verlauf des Sondensignals 22 als Funktion des definierten, aktuellen Abstands 17 der Sonde 21 zu einer glatten, blanken Oberfläche des Kalibrierstandards 13 als Sondenkennlinie 31 registriert.

Die Registriereinrichtung 27 umfaßt eine Recheneinrichtung mit Speicher 29. In dem Speicher der Registriereinrichtung 27 wird die genannte Sondenkennlinie 31 abgelegt. Die Aufnahme der Kennlinie 31 ist mit dem Abschluß des Abhebevorgangs der Sonde 21 durch Erreichen eines maximalen Abstands 19 der Sonde 21 von der Oberfläche des Kalibrierstandards 13 beendet.

Nach Abschluß der Kalibrierung wird die Abstandsmeßsonde 21 entlang eines Weges 11 an der Oberfläche 9 des Kernreaktorbauteils zur Vermessung einer Inhomogenität 3 von einem Startpunkt S bis zu einem Endpunkt E geführt. Dabei befindet sich die Sonde in einem konstanten Abstand zur Oberfläche 9 des Kernreaktorbauteils 1. In diesem Beispiel wird die Stirnfläche der Sonde 21 direkt auf die Oberfläche des ebenen Bauteils aufgesetzt.

Während der Meßfahrt entlang des Weges 11 an der Oberfläche 9 des Kernreaktorbauteils 1 nimmt die Abstandsmeßsonde 21 die räumliche Ausdehnung der Inhomogenität 3 an der Oberfläche 9 des Kernreaktorbauteils 1 - wie in Figur 1 gezeigt - als sich ändernde Schichtdicke 7 der Inhomogenität 3 wahr. Diese Schichtdicke 7 der Inhomogenität 3 erstreckt sich senkrecht zur Oberfläche 9 des Kernreaktorbauteils bis zur Grenzfläche 6 zwischen Inhomogenität 3 und Grundmaterial 5.

Gemäß der sich ändernden Schichtdicke 7 der Inhomogenität 3 wird während der Meßfahrt entlang des Weges 11 ein sich änderndes Sondensignal 22 erzeugt. Das Sondensignal 22 stimmt jeweils für die aktuelle Schichtdicke 7 im Rahmen der notwendigen Meßgenauigkeit mit dem Sondensignal überein, das bei der Kalibrierung der Sonde für einen mit der Schichtdicke 7 identischen Abstand 17 erzeugt wurde. Somit kann dem für die Schichtdicke 7 erzeugten Sondensignal 22 mittels der Sondenkennlinie 31 ein Abstand 17 zugeordnet werden, welcher die Schichtdicke bestimmt. Die Auswertung des Sondensignals 22 gemäß der Sondenkennlinie 31 wird in der Recheneinrichtung 29 der Registriereinrichtung 27 durchgeführt, die auf die Sondenkennlinie 31 im Speicher 29 der Registriereinrichtung 27 zugreift. Somit kann die räumliche Ausdehnung der Inhomogenität, wie in Figur 1 skizziert als vertikale Ausdehnung der Inhomogenität senkrecht zur Oberfläche 9 eines Kernreaktorbauteiles 1 in Abhängigkeit des abgefahrenen Weges 11 bestimmt werden.

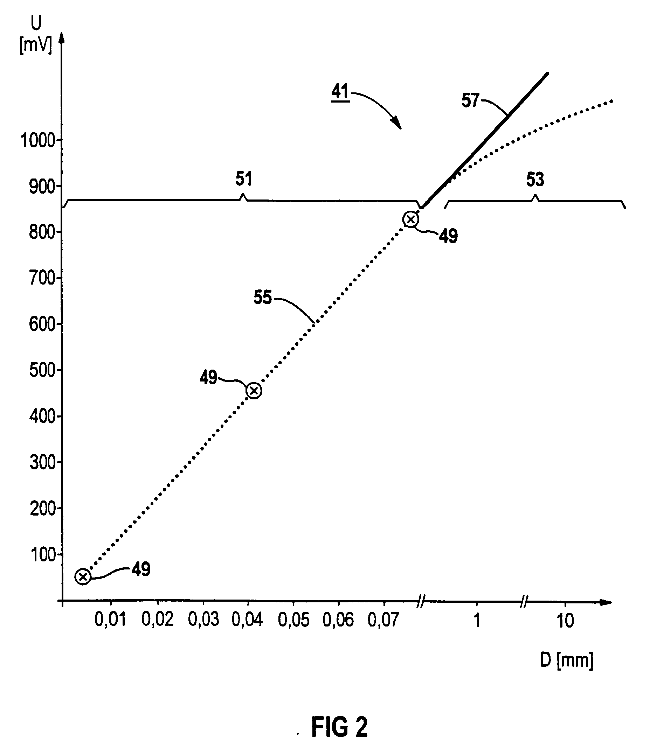

In Figur 2 ist eine typische Sondenkennlinie 41 dargestellt. Die Sondenkennlinie 41 zeigt den Verlauf eines von der Kalibrierung ermittelten Sondensignals U - hier eine Spannung U im mV - als Funktion eines definierten aktuellen Abhebeabstands D - hier D in µm. Wegen des Kalibrierverfahrens besteht die Sondenkennlinie aus einer dichten Folge von Kalibrierpunkten 55, die so dicht liegen, daß sie praktisch die Sondenkennlinie bestimmen. Nutzt man die dichte Folge von Kalibrierpunkten 55 als Stützpunkte zur Interpolation der Sondenkennlinie, so ergibt sich ein weitaus genauerer Verlauf der Sondenkennlinie als es für eine Sondenkennlinie 57 nach einem Verfahren gemäß dem eingangs beschriebenen Stand der Technik mit nur drei Stützpunkten 49 möglich gewesen wäre.

Insbesondere zeigt Figur 2, daß die Erfindung eine Kalibrierung der Sonde 21 über einen wesentlich größeren Abstandsbereich D ermöglicht, als es nach einem Verfahren gemäß dem Stand der Technik möglich gewesen wäre. Gemäß der Erfindung ist eine exakte Kalibrierung der Sonde 21 sowohl in einem linearen Bereich 51 der Kennlinie 41 möglich als auch in einem nichtlinearen Bereich 53 der Sondenkennlinie 41. Wie der Vergleich der Kennlinie 57 nach einem Verfahren gemäß dem Stand der Technik und der Kennlinie 41 nach dem Verfahren gemäß der Erfindung zeigt, liefert ein Verfahren gemäß dem Stand der Technik im nichtlinearen Bereichen 53 einer Sondenkennlinie 41 grundsätzlich falsche Ergebnisse. Die lineare Kennlinie 57 nach dem Stand der Technik folgt im Bereich 53 nicht dem tatsächlichen nichtlinearen Verlauf der Sondenkennlinie 41.

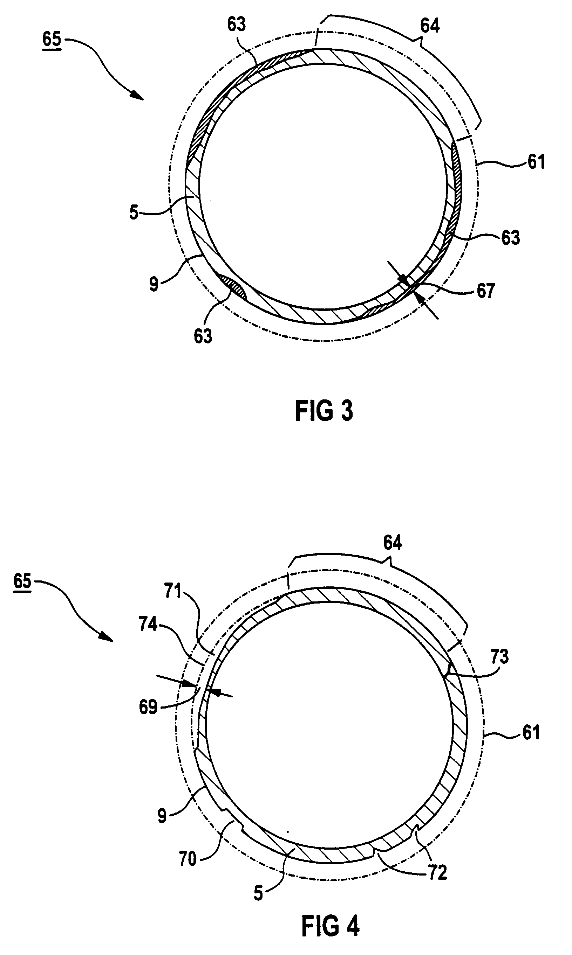

In Figur 3 ist eine mögliche Form einer Inhomogenität 3 an der Oberfläche 9 eines Brennstabs 65 beispielhaft gezeigt. Bei dieser Form der Inhomogenität 3 handelt es sich um Oxidschichten 63 mit einer sich ändernden Dicke 67. Die Dicke der Oxidschicht 63 wird in Abhängigkeit eines Umfangwinkels ausgemessen, indem die Sonde durch Abheben von einem glatten Bereich mit blanker Oberfläche 64 am Brennstab abgehoben und dadurch kalibriert wird, und sie anschließend zur Vermessung der Oxidschicht 63 entlang eines Weges 61 in konstantem Abstand von der Oberfläche geführt wird. Alternativ kann die Vermessung der Oxidschicht auch so erfolgen, daß die Sonde 21 in einem konstanten Abstand zur Oberfläche 9 des Brennstabs 65 gehalten und der Brennstab 65 unter der Sonde gedreht wird.

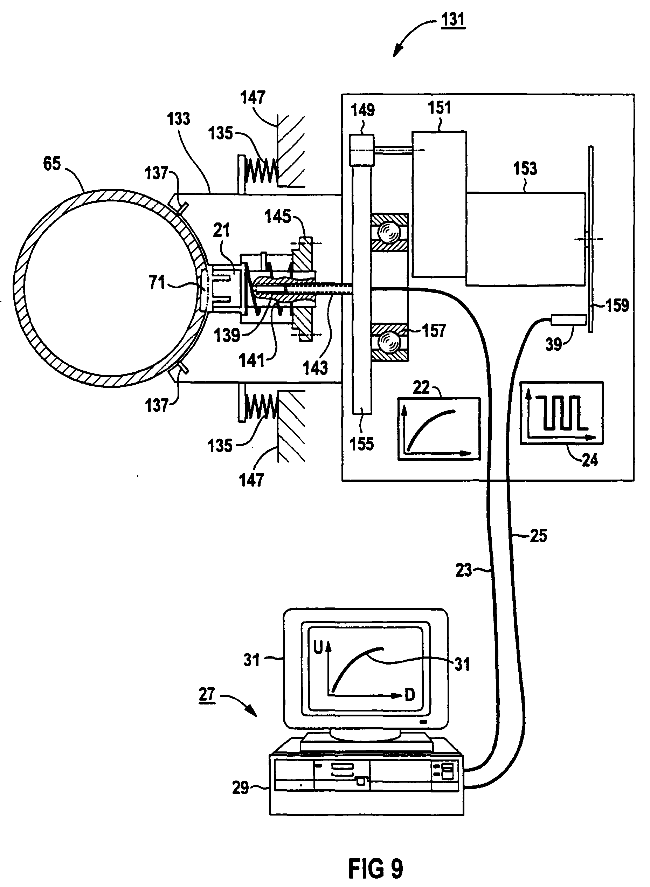

Weitere mögliche Formen einer Inhomogenität an einen Brennstab sind in Figur 4 gezeigt. Eine Vermessung der räumlichen Ausdehnung dieser Inhomogenitäten 70 bis 73 kann wie bereits bei Figur 3 beschrieben erfolgen. Mit 73 ist ein von der Oberfläche ausgehender Riß, mit 72 eine punktförmige Kerbe und mit 70 eine Rille bezeichnet. An der Stelle 71 ist (z.B. durch Reibung an einem Abstandhalter) ein Teil des Materials abgetragen. Dadurch wurde ein tiefliegendes Grundmaterial freigelegt, das im ursprünglichen bzw. idealen Zustand, dem der strichpunktiert gezeichneten Verlauf 74 der Oberfläche entspricht, von einer darüberliegenden Schicht des Grundmaterials bedeckt war. Die Abstandineßsonde erfaßt den Abstand zu diesem freigelegten Material, wobei die Differenz zwischen diesem tatsächlich erfaßten Abstand und dem Abstand im ursprünglichen bzw. idealen Zustand als Schichtdicke des Abtrags bezeichnet ist. Da die Meßsonde in der Regel praktisch in einem konstanten Abstand zur idealen Oberfläche geführt wird, wie bei Figur 9 noch erläutert wird, kann mit der Meßsonde also auch ein derartiger Materialabtrag ausgemessen werden.

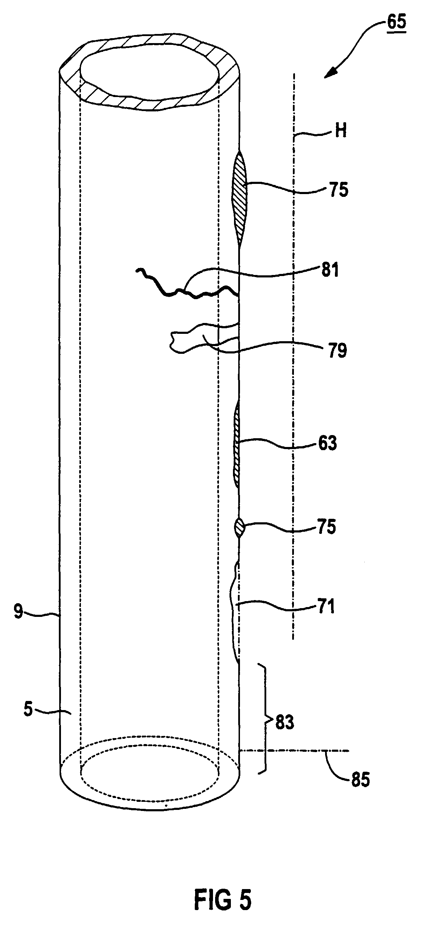

Während Figur 3 und Figur 4 einen Brennstab entlang eines Schnitts senkrecht zu seiner Längsachse zeigen, ist in Figur 5 ein Ausschnitt eines Brennstabs 65 entlang seiner Längsachse dargestellt. Eine Vermessung der räumlichen Ausdehnung der Inhomogenitäten 71, 79, 63, 75 erfolgt nach einer weiteren Ausführungsform des Verfahrens der Erfindung entlang eines Wegs H parallel zur Längsachse des Brennstabs 65. Dabei kann die räumliche Ausdehnung eines Materialabtrags 71 oder eines Loches 79 oder einer Oxidschicht 63, oder auch eines Risses 81 im Brennstab vermessen werden. Das Verfahren gemäß der Erfindung eignet sich auch zur Vermessung von Oxidlinsen 75 oder ähnlichen Oxidschichten, die über das ursprüngliche Volumen des Grundmaterials 5 hinausragen, beispielsweise weil das Oxid des Grundmaterials ein größeres Volumen einnimmt als das Grundmaterial selbst. Da die Oxidation stark temperaturabhängig ist, ist die untere Endkappe des Brennstabs, die im kältesten Teil des Reaktorkerns sitzt, in der Regel blank und glatt. Daher kann nach dieser Ausführungsform des obigen Verfahrens die Kalibrierung der Sonde 21 im Fußbereich 83 des Brennstabs erfolgen, der dabei als Kalibrierstandard dient. Die Sonde 21 wird dazu von der glatten und blanken Oberfläche 83, also dem Kalibrierstandard 83 entlang des Abhebewegs 85 abgehoben, und die Sondenkennlinie registriert.

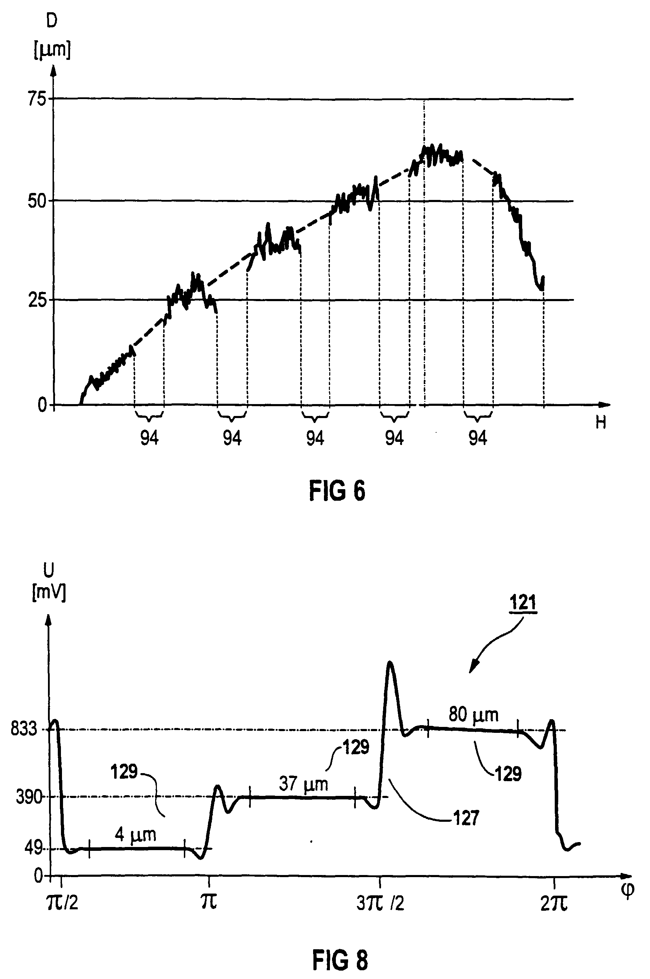

Figur 6 zeigt das Ergebnis einer Vermessung einer Oxidschicht an der Oberfläche eines Brennstabs mittels des gemessenen Sondensignals und der zuvor aufgenommenen Kennlinie. Aufgetragen ist die Oxidschicht D in µm als Funktion einer axialen Position H am Brennstab. Ausgenommen von der Messung sind Bereiche 94, an denen im Brennelement ein Abstandhalter sitzt. Vor allem zeigt Figur 6, daß im Fußbereich des Brennstabs keine Oxidschicht vorhanden ist. Dieser Fußbereich 83 kann also als Kalibrierstandard genutzt werden.

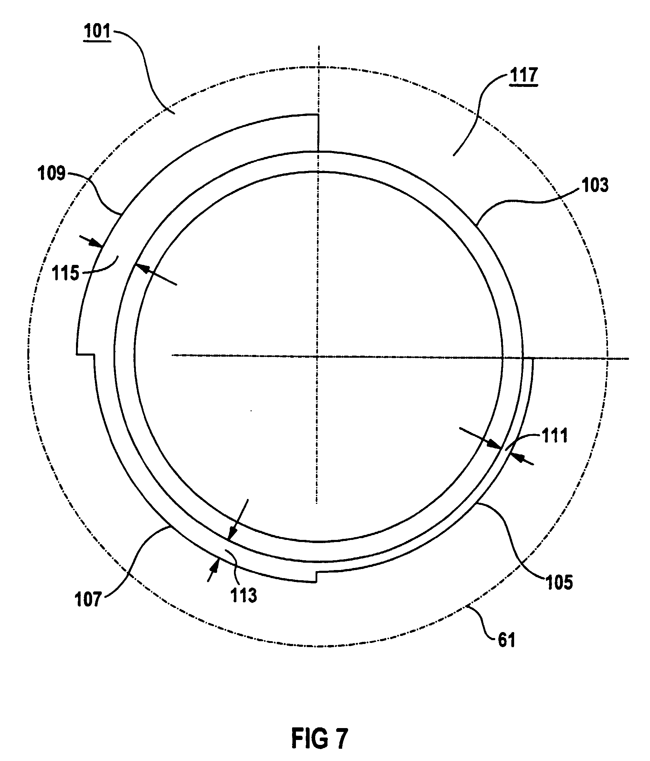

Figur 7 zeigt schematisch einen Referenzstandard 101, der für ein Verfahren nach dem Stand der Technik benutzt wird und prinzipiell auch beim vorliegenden Verfahren als Kalibrierstandard verwendet werden könnte. Ein solcher Referenzstandard kann vermessen werden. Wie bereits erläutert, besteht ein solcher Referenzstandard 101 aus einem Hüllrohrstück 103, das in seinen Materialeigenschaften im wesentlichen mit dem zu vermessenden Brennstab übereinstimmt. Auf einem Kalibrierstandard ( d.h. dem Hüllrohrstück 103) sind Folien 105, 107, 109 mit kleiner Dicke 111 (4 µm), mit mittlerer Dicke 113 (40 µm) und großer Dicke 115 (80 µm) aufgeklebt, die selbst eine bereichsweise glatte und blanke Oberfläche 117 darstellen. In der Figur 7 ist dies in nicht maßstabsgetreuer Weise dargestellt. Die Vermessung des Referenzstandards erfolgt beispielsweise, indem eine Abstandssonde gemäß der Erfindung an der Oberfläche des Hüllrohrstücks 103 kalibriert und entlang eines Wegs 61 in konstantem Abstand zu diesem Kalibrierstandard geführt wird.

Das Ergebnis 21 der Vermessung des Referenzstandards 101 (Figur 7) ist in Figur 8 dargestellt. Aufgetragen ist ein Sondensignal (Spannung U in mV) als Funktion des Umfangwinkels also das Ergebnis der Meßfahrt entlang des Wegs 61 in Figur 7. Die erkennbaren Plateaus 129 der Meßkurve 127 sind den blanken und glatten Bereichen 105, 107, 109 zuzuordnen. Die ermittelten Dicken dieser Bereiche stimmen mit der für den Referenzstandard angegebenen kleinen Dicke (4 µm) und der für den Referenzstandard angegebenen großen Dicke (80 µm) überein. Die ermittelte mittlere Dicke 113 der Folie 107 mit mittlerer Dicke beträgt jedoch nur 37 µm anstatt wie zum Referenzstandard angegeben 40 µm. Hier liefert das Verfahren also eine wesentlich genauere Bestimmung der Schichtdicken am Referenzstandard, als es durch ein Verfahren gemäß dem Stand der Technik möglich gewesen wäre.

Figur 9 zeigt eine vorteilhafte Vorrichtung, wie sie zur Vermessung der räumlichen Ausdehnung einer Inhomogenität an der Oberfläche eines Brennstabs ausgeführt werden kann. Der Brennstab 65 hat einen Materialabtrag 71 und ist im Querschnitt senkrecht zur Längsachse des Brennstabs gezeigt. Zur Vermessung des Materialabtrags 71 ist eine Vorrichtung 131 auf den Brennstab gesetzt. Die Vorrichtung 131 enthält eine Abstandsmeßsonde 21, die auf einen Sockel mit Bohrung und Präzisionsgewinde 139 aufgesetzt ist. Über eine drehbare Präzisionsspindel 143, die in das Präzisionsgewinde 139 eingreift, kann die Wirbelstromsonde 21 auf die Oberfläche des Brennstabs 65 aufgesetzt und durch Drehen der Präzisionsspindel 143 mit definiertem Abstand von der Oberfläche des Brennstabs 65 abgehoben werden.

Angetrieben wird die Präzisionsspindel 143 über einen Motor 153, dessen Drehzahl durch ein Getriebe 151 übersetzt wird auf ein Antriebsrad 149, welches beispielsweise über einen Gummibelag einen Kraftschluß zu einem Kupplungsrad 155 hat. Längs der Achse des Kupplungsrads 155 ist zentrisch die Spindel 143 fest angebracht und zusammen mit dem Kupplungsrad ist die Spindel 143 in einem Präzisionslager 157 gelagert. Somit wird bei definierter Drehzahl des Motors ein über die Präzisionsspindel 143 und das Präzisionsgewinde 139 definierter Hub entsprechend der Gewindesteigung auf die Wirbelstromsonde 21 ausgeübt, und diese kann somit mit definiertem Abstand vom Brennstab 65 abgehoben werden.

Die maximale Amplitude, über welche der Hub einstellbar ist, wird bei der Vorrichtung durch zwei hier nicht dargestellte Endschalter definiert. Diese sind im Abstand der maximalen Amplitude längs der Spindel 143 angebracht. Durch ein von der Spindel mitgeführtes Kontaktelement ist der erste Endschalter auslösbar, wenn es von der Spindel auf die Höhe des ersten Endschalters geführt wird. Darüber wird die Drehung der Spindel gestoppt. Dieser Zustand definiert die maximal ausfahrbare Position der Spindel 143 und damit die nächste Entfernung der Abstandsmeßsonde 21 von der Oberfläche des Brennstabs 65. In umgekehrter Drehrichtung der Spindel 143 ist nach Durchlaufen der maximalen Amplitude der zweite Endschalter durch das Kontaktelement auslösbar. Dieser Zustand definiert die maximal einfahrbare Position der Spindel 143 und damit die Position der Abstandsmeßsonde 21, welche von der Oberfläche des Brennstabs 65 am weitesten entfernt ist. Auf diese Weise ist ein wegbegrenzender Signalgeber realisiert, der aber auch anders als hier beschrieben ausgebildet sein kann.

Die mechanischen Teile der Vorrichtung 131 können gegebenenfalls periodische, systematische Ungenauigkeiten verursachen. Diese können beispielsweise beim Drehen der Präzisionsspindel 143 und durch drehende Teile im Präzisionsgewinde 139 entstehen und besitzen ein bis fünf Perioden pro Umdrehung der Spindel 143. Die Sondenkennlinie wird von solchen kleinen, systematischen Ungenauigkeiten bereinigt, indem eine Referenzmessung durchgeführt wird, welche diese Ungenauigkeiten erfaßt. Dazu wird der aktuelle Abstand 17 beim Bewegen der Sonde 21 mit der Präzisionsspindel 143 zum einen über ein Abstandssignal 24 des Mittels zur Abstandsmessung 37 in der Vorrichtung 131 und zum anderen über einen eichgenauen Wegaufnehmer (beispielsweise einen optischen Wegaufnehmer) registriert. Eichgenaue Wegaufnehmer mit einem Meßfehler unter 250 nm sind im Handel erhältlich. Während bei der Referenzmessung das Abstandssignal 24 den Sollweg erfaßt, so erfaßt der eichgenaue Wegaufnehmer auch alle Ungenauigkeiten, die von der Präzisionsspindel 142 auf die Bewegung der Sonde 21 übertragen werden. Diese Ungenauigkeiten liegen etwa im µm-Bereich, also bei einem Verhältnis zum aktuellen Abstand 17 von 10⁻³ oder darunter. Der Unterschied der so ermittelten Referenzkennlinie zu dem von dem Mittel zur Abstandsmessung 37 der Vorrichtung 131 ermittelten Abstandssignal 24 ergibt die Fehlerkennlinie. Sie wird beispielsweise durch Subtraktion der Referenzkennlinie vom Abstandssignal 24 gebildet.

Gegebenenfalls wird die genannte Fehlerkennlinie digital gespeichert und/oder zusätzlich bearbeitet oder fouriertransformiert. Zur Korrektur der Sondenkennlinie 31 wird dann die Fehlerkennlinie dem Speicher beispielsweise einer Recheneinrichtung 29 entnommen und von der Sondenkennlinie 31 abgezogen. Gegebenenfalls kann die Sondenkennlinie 31 auch fouriertransformiert werden und anschließend eine Korrektur im Fourierraum über die fouriertransformierte Fehlerkennlinie erfolgen. Die Sondenkennlinie 31 kann also auch im Fourierraum korrigiert werden.

Insbesondere gibt die Fehlerkennlinie die systematischen Fehler beim Bewegen der Sonde 21 an, die in der Sondenkennlinie 31 mittels der Fehlerkennlinie korrigiert werden.

Alternativ besteht auch die Möglichkeit die Sondenkennlinie 31 über eine digitale Bearbeitung zu korrigieren, was die Referenzmessung umgeht. Dazu wird die Sondenkennlinie 31 zunächst zur Kalibrierung aufgenommen. Da die genannten Fehler lediglich einen relativen Amplitudenanteil von höchstens 10⁻³ im Verhältnis zum aktuellen Abstand 17 haben, kann die Sondenkennlinie 31 beispielsweise durch Mittelung benachbarter Kalibrierpunkte 55 oder auf andere Weise geglättet werden. Beispielsweise kann auch ein Fourierfilter zur Glättung der Sondenkennlinie 31 dienen. Diese geglättete Sondenkennlinie 31 kann dann für die spätere Messung der Inhomogenität zur Kalibrierung dienen, kann aber auch als Referenzkennlinie dienen.

Zur Erzeugung des Abstandssignals 24 dient ein Impulsgeber 39. Dieser wertet beispielsweise die Drehungen einer mit der Motorachse gekoppelten Lochscheibe 159 aus, und erzeugt so eine Pulssequenz, die proportional zu den Umdrehungen der Spindel ist und damit zum Hub bzw. Abhebeabstand der Wirbelstromsonde 21. Das Sondensignal 22 wird über eine Leitung 23 und das Abstandssignals 24 über eine Leitung 25 an eine Registriereinrichtung 27 übermittelt. Die Registriereinrichtung 27 umfaßt eine Recheneinrichtung zur Auswertung von Sonden- und Wegsignal unter Berücksichtigung der Sondenkennlinie 31 sowie einen Speicher zur Ablage der Kennlinie 31 und eine Ausgabeeinheit zur Darstellung der Sondenkennlinie 31 oder beispielsweise der Darstellung der räumlichen Ausdehnung einer Inhomogenität.

Beispielsweise läßt sich eine Spindel 143 mit 500 µm Hub und ein Präzisionsgewinde 139 mit einer Übersetzung von 1:500 auslegen. Bei einer Abtastung jeder Umdrehung in 16 Intervallen läßt sich gegebenenfalls mit einer nachfolgenden Interpolation eine theoretische Genauigkeit im Bereich von 10 bis 20 nm zur Anzeige bringen. Die statistische Meßgenauigkeit bei einer solchen Vorrichtung 131 liegt dabei im Bereich von einigen 100 nm, insbesondere etwa bei 500 nm.

Zum Abheben der Abstandsmeßsonde 21 ist diese durch eine Abhebeführung 145 in einem Führungsschuh 133 der Vorrichtung gelagert, und mit einer Feder 141 ist das Präzisionsgewinde 139 gegen die Präzisionsspindel 143 auf Spannung gehalten. Der genannte Führungsschuh 133 besitzt vorteilhaft eine Form, die dem zu vermessenden Kernreaktorbauteil angepaßt ist. Nach Figur 9 besitzt er eine konkavzylindrische Wölbung mit einer Öffnung für die Abstandsmeßsonde 21 und weiterhin einen Distanzhalter 137, beispielsweise Saphire, zur Führung der Abstandsmeßsonde 21 auf dem Brennstab. Die Wölbung und die Saphire sind so angeordnet, daß der Distanzhalter für einen praktisch konstanten Abstand der Meßsonde zur Oberfläche des Brennstabs sorgt. Die ganze Vorrichtung ist über den Führungsschuh 133 mit einer Feder 135 kardanisch auf einem Montageteil 147 eines nicht näher beschriebenen Positionsmanipulators gelagert.

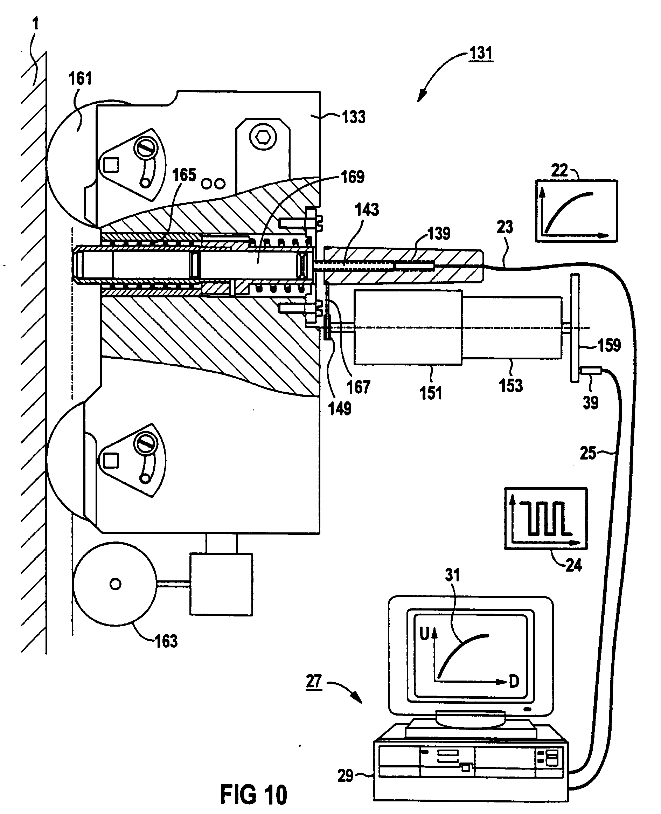

Figur 10 zeigt eine weitere vorteilhafte Ausführungsform der Vorrichtung. Ihre wesentlichen Teile stimmen mit den in Figur 9 erläuterten Teilen überein, sind diesmal jedoch anders angeordnet. Als Abstandsmeßsonde dient bei dieser Vorrichtung eine Ultraschallsonde 169, die mit einem Lager 165 zur Durchführung des Abhebevorgangs im Führungsschuh gelagert ist. Der Kraftschluß zwischen Getriebe und einem drehbaren Rundteil mit Präzisionsgewinde erfolgt diesmal über einen Keilriemen 167. Desweiteren wird die Vorrichtung mit Führungsradern 161, die am Führungsschuh vorzugsweise höhenverstellbar gelagert sind, entlang eines Wegs 11 an der Oberfläche eines vorzugsweise ebenen Kernreaktorbauteils bewegt. Zur Vermessung von Brennstäben können die Führungsräder 161 beispielsweise eine dem Brennstabdurchmesser angepaßte rundliche Nut an ihren Laufflächen haben. Zum Vorschub der Vorrichtung dient bei der in Figur 10 dargestellten vorteilhaften Vorrichtung ein Antriebsmotor mit einem Antriebsrad 163.

## Patentansprüche

1. Verfahren zur Vermessung einer Inhomogenität (3) an einer Oberfläche (9) eines Kernreaktorbauteils (1), insbesondere einer Oberflächenschicht, mit einer Abstandsmeßsonde (21), bei dem in einem ersten Verfahrensschritt zur Kalibrierung der Abstandsmeßsonde eine Sondenkennlinie (31) ermittelt wird, und bei dem in einem zweiten Verfahrensschritt die Vermessung der Inhomogenität erfolgt, indem die Abstandsmeßsonde (21) entlang eines Wegs (11) in einem konstanten Abstand, über die Oberfläche (9) geführt wird, und die Ausdehnung der Inhomogenität aus dem Weg (11) und dem mittels der Sondenkennlinie (31) ausgewerteten Sondensignal bestimmt wird, **dadurch gekennzeichnet,** daß die Abstandsmeßsonde (21) zur Ermittlung der Sondenkennlinie (31) zwischen einer glatten und blanken Oberfläche (15) und einem maximalen Abstand (19) bewegt wird, und dabei praktisch ständig ein aktueller Abstand (17) von der glatten und blanken Oberfläche (15) und das Sondensignal (22) registriert wird.

2. Verfahren nach Anspruch 1 **dadurch gekennzeichnet,** daß sich das Kernreaktorbauteil (1) und die glatte und blanke Oberfläche (15) unter Wasser in einem Becken eines Kernreaktors befinden.

3. Verfahren nach Anspruch 1 oder 2, **dadurch gekennzeichnet,** daß der Abstand (17) zu der glatten und blanken Oberfläche (15) schrittweise geändert wird, und daß bei jedem Schritt der aktuelle Abstand (17) und das jeweils zugehörige Sondensignal (22) registriert werden.

4. Verfahren nach Anspruch 1 bis 3,
**dadurch gekennzeichnet**, daß die Sondenkennlinie (31) auf Fehler, insbesondere auf systematische Fehler, mittels einer Fehlerkennlinie korrigiert wird.

5. Verfahren nach Anspruch 4,
**dadurch gekennzeichnet**, daß mit einer Referenzmessung und/oder einer digitalen Bearbeitung der Sondenkennlinie (31) eine Referenzkennlinie und anschließend deren Unterschied zum aktuellen Abstand (17) ermittelt wird, woraus sich die Fehlerkennlinie ergibt.

6. Verfahren nach einem der Ansprüche 1 bis 5,
**dadurch gekennzeichnet**, daß ein glatter Bereich mit blanker Oberfläche (15) am Kernreaktorbauteil (1) selbst als Kalibrierstandard verwendet wird.

7. Verfahren nach einem der Ansprüche 1 bis 6,
**dadurch gekennzeichnet**, daß die glatte und blanke Oberfläche (15) Teil eines glatten Bauteils mit blanker Oberfläche und praktisch gleichen Materialeigenschaften wie das Kernreaktorbauteil ist und als Kalibrierstandard verwendet wird.

8. Verfahren nach einem der Ansprüche 1 bis 7,
**dadurch gekennzeichnet**, daß als Abstandsmeßsonde (21) eine Wegaufnehmersonde vorzugsweise eine elektrische Wirbelstromsonde oder eine Ultraschallsonde oder ein Induktivwegaufnehmer dient.

9. Verfahren nach einem der Ansprüche 1 bis 8,
**dadurch gekennzeichnet**, daß als Inhomogenität (3) eine Schicht, insbesondere eine Oxidschicht (63), auf einem Grundmaterial oder ein Materialabtrag (71) an der Oberfläche eines Grundmaterials oder ein von der Oberfläche eines Kernreaktorbauteils ausgehender Riß (73) ausgemessen wird.

10. Verfahren nach einem der Ansprüche 1 bis 9,
**dadurch gekennzeichnet**, daß die Abstandsmeßsonde (21) mittels einer Abhebeeinrichtung (33), die einen Impulsgeber (39) beinhaltet, von der glatten und blanken Oberfläche (15) abgehoben wird, wobei der Impulsgeber wegproportionale Impulse (24) liefert, vorzugsweise nicht weniger als 10000 Impulse pro Millimeter.

11. Verfahren nach einem der Ansprüche 1 bis 10,
**dadurch gekennzeichnet**, daß der maximale Abstand (19) bis zu 10 mm beträgt.

12. Anwendung des Verfahrens nach einem der Ansprüche 1 bis 11, zur Vermessung einer elektrisch praktisch nicht leitenden Schicht (3), insbesondere einer Oxidschicht oder einer Schicht abgetragenen Materials, auf einem leitfähigen Grundmaterial (5), insbesondere auf metallischen Flächen, die vorzugsweise überwiegend aus Zirkonium bestehen.

13. Anwendung nach Anspruch 12 bei Komponenten von Kernreaktorbrennelementen, insbesondere bei Brennstäben.

14. Anwendung des Verfahrens nach einem der Ansprüche 1 bis 11 zur Vermessung eines Referenzstandards (101) mit bereichsweise glatten und blanken Oberflächen, die durch Stufen mit definierter Höhe gegeneinander abgegrenzt sind.

15. Vorrichtung zur Vermessung einer Inhomogenität (3) an einer Oberfläche eines Kernreaktorbauteils (1), insbesondere einer Oberflächenschicht, mit einer Abstandsmeßsonde (21), die mittels eines auf einer Oberfläche aufsetzbaren Distanzhalters (137) und einer Vorschubeinrichtung (163) entlang eines Wegs (11) in einem konstanten Abstand über die Oberfläche verschiebbar ist, und einer Recheneinrichtung (29), über die aus dem Signal der Abstandsmeßsonde (22) und einer einem Speicher entnehmbaren Kennlinie (31) die zur Oberfläche praktisch senkrechte Ausdehnung (7) der Inhomogenität am Ort der Abstandsmeßsonde bestimmbar ist, und mit einer Bewegungseinrichtung (33) zum Bewegen der Abstandsmeßsonde zwischen der glatten und blanken Oberfläche und einem maximalen Abstand und einer Registriereinrichtung (27), über die beim Bewegen der aktuelle Abstand von der Oberfläche und das Signal der Abstandsmeßsonde (22) als Sondenkennlinie im Speicher hinterlegbar ist.

16. Vorrichtung nach Anspruch 15, **dadurch gekennzeichnet,** daß die Registriereinrichtung (27) die Recheneinrichtung (29) mit einem Speicher enthält.
